## Europäisches Patentamt

(19) ## European Patent Office

## Office européen des brevets

(11) Veröffentlichungsnummer: **0 126 980**
**B1**

(12) ## EUROPÄISCHE PATENTSCHRIFT

(45) Veröffentlichungstag der Patentschrift:
**16.09.87**

(51) Int. Cl.⁴: **G 11 B 23/03**, G 11 B 33/04

(21) Anmeldenummer: **84104653.5**

(22) Anmeldetag: **25.04.84**

(54) **Vorrichtung zur geordneten Ablage und Aufbewahrung von flächig ausgebildeten Gegenstanden.**

(30) Priorität: **28.04.83 DE 8312485 U**
**18.04.84 DE 8412227 U**

(43) Veröffentlichungstag der Anmeldung:
**05.12.84 Patentblatt 84/49**

(45) Bekanntmachung des Hinweises auf die Patenterteilung:
**16.09.87 Patentblatt 87/38**

(84) Benannte Vertragsstaaten:
**AT BE CH DE FR GB IT LI LU NL SE**

(56) Entgegenhaltungen:
**DE - A - 2 503 255**
**DE - U - 8 220 436**
**FR - A - 1 024 620**
**US - A - 2 064 737**

(73) Patentinhaber: **Datox-Organisation D. Schweinsberg GmbH & Co. KG, Postfach 1280, D-8633 Rödental (DE)**

(72) Erfinder: **Schweinsberg, Dieter, Gothaer Strasse 2, D-8631 Lautertal 2 (DE)**

(74) Vertreter: **Patentanwälte Müller-Boré, Deufel, Schön, Hertel, Lewald, Otto, Isartorplatz 6, D-8000 München 2 (DE)**

# Beschreibung

Die Erfindung betrifft eine Vorrichtung zur geordneten Ablage und Aufbewahrung von flächig bzw. blatt- oder folienförmig ausgebildeten Gegenständen, insbesondere flächigen Informationsträgern, wie Disketten, Mikrofilmen, Schallplatten, Fotos, Karteikarten usw., wobei mehrere in beliebiger Anzahl hintereinander angeordnete, die Gegenstände aufnehmende taschenartige Hüllen, die jeweils derart miteinander verbunden und/oder ineinandergesteckt sind, dass jede Hülle in bezug auf die jeweils benachbart davorliegende Hülle seitlich geführt und um einen bestimmten Betrag nach oben verschiebbar gehalten ist, vorgesehen sind, und wobei die Hüllen – abgesehen von der vordersten Hülle – jeweils eine an der Vorderseite angeordnete Zunge aufweisen, die in eine Aussparung in der Rückseite der davor angeordneten Hülle eingreift, und deren an der Rückseite angeordnete Aussparung von der Zunge der dahinterliegenden Hülle durchgriffen ist.

Es ist bekannt, flächige Gegenstände, insbesondere flächenförmig gestaltete Informationsträger, z.B. die in der elektronischen Datenverarbeitung benötigten Disketten, in Hüllen aufzubewahren und vor schädlichen Umwelteinflüssen zu schützen. Die Organisation und Zusammenfassung der einzelnen Hüllen erfolgt in verschiedener Form. Zum einen werden die einzelnen Hüllen in einem Karteikasten zur sog. Blockkartei zusammengefasst, bei der sie hintereinander liegend blockartig gestapelt sind. Bei dieser Art der Ablage gestaltet sich die Suche nach einer bestimmten Hülle schwierig; der jeweilige Sachbearbeiter ist meist gezwungen, den gesamten Karteikasten zu seinem Arbeitsplatz zu bringen. Bei einer weiteren Art der Ablage, der sog. Flächenkartei, bei der die einzelnen Hüllen hintereinanderliegend fächerartig ausgebreitet werden können, kann zwar eine bestimmte Hülle leichter herausgefunden werden, die Aufnahmekapazität einer solchen Fächerkartei ist jedoch nur begrenzt. Schliesslich ist auch eine Ablage als Flachsichtkartei bekannt, bei der die Ablage in Schuppenform erfolgt. Hierbei liegen die einzelnen Hüllen oder Taschen in Höhenrichtung gestaffelt vor, so dass der jeweils benötigte Informationsträger schnell herausgefunden wird. Auch diese Art der Ablage weist nur eine begrenzte Aufnahmekapazität auf, wobei die Anzahl der Hüllen vorgegeben ist.

Aus der DE-U-8 220 436 ist eine gattungsgemässe Vorrichtung bekannt. Dort sind die Taschen oder Hüllen an den Vertikalrändern offen und jede Vorder- und Rückseite weist jeweils einen Schlitz und eine Zunge auf. Die Herstellung und insbesondere der Zusammenbau der Taschen oder Hüllen ist dort aufwendig.

Aus der DE-A-2 503 255 ist eine Vorrichtung zum schuppenartigen gestaffelten Anordnen von Blattgut od.dgl. bekannt, bei welcher gefaltete Einstecktaschen mit einem umgefalteten Rand an dem Rückwandabschnitt den Rand eines Vorderwandabschnittes einer dahinter angeordneten Einstecktasche übergreift. Ein Zusammenschieben der Einstecktaschen ist dort nicht möglich.

Der Erfindung liegt die Aufgabe zugrunde, eine gattungsgemässe Vorrichtung derart auszubilden, dass die Vorteile einer Verschiebung der Taschen oder Hüllen mit einfachen Mitteln sicher gewährleistet sind.

Zur Lösung dieser Aufgabe sieht die Erfindung die im kennzeichnenden Teil des Anspruchs 1 angegebenen Merkmale vor, wobei in den Unteransprüchen für die Aufgabenlösung vorteilhafte und weiterbildende Merkmale angegeben sind.

Bei der erfindungsgemässen Ablagevorrichtung handelt es sich um taschenartige Hüllen, die in beliebiger und für den jeweiligen Zweck erforderlicher und erweiterbarer Anzahl hintereinanderliegend angeordnet und miteinander verbunden und/oder ineinandergesteckt sind. Dabei ist die Verbindung zwischen den einzelnen Hüllen derart, dass die Hüllen zueinander seitlich geführt und um einen bestimmten Betrag nach oben herausziehbar sind. Die einzelnen Hüllen liegen also zunächst als Blockablage vor, wobei ein Auffächern der Hüllen in der Art der Fächerkartei möglich ist. Wird die hinterste Hülle nach oben gezogen, so verschiebt sie sich gegenüber der benachbarten vorderen Hülle um einen bestimmten Betrag nach oben bis zu einem Anschlag. Beim weiteren Hochziehen wird nun die benachbarte Hülle um diesen bestimmten Betrag hochgezogen, diese nimmt sodann die folgende Hülle mit usw. bis sämtliche Hüllen in der Art einer Schuppentafel bzw. Schuppenkartei übereinander gestaffelt vorliegen und das Heraussuchen eines gesuchten Gegenstandes bzw. Informationsträgers ohne Schwierigkeiten möglich ist. Zweckmässigerweise sind nach einem weiteren Merkmal der Erfindung Griff- und Sichtausschnitte bzw. Sichtaussparungen vorgesehen, so dass der gesuchte Informationsträger sofort erkannt und herausgenommen werden kann.

Bei der erfindungsgemässen Ablagevorrichtung ist es also möglich, so viele Hüllen miteinander zu verbinden, wie dies für bestimmte Informationsvorgänge erforderlich ist, so dass der jeweilige Sachbearbeiter nicht eine Vielzahl unnützer Hüllen zu seinem Arbeitsplatz bringen muss, sondern gerade soviel, wie er benötigt. Dabei passt sich die Vorrichtung den jeweiligen Organisationsformen an, d.h. kann als Blockkartei, Fächerkartei oder Flachsichtkartei in der Art der Schuppentafel eingesetzt werden. Die einzelnen Hüllen sind so miteinander verbunden, dass sie, wie beschrieben, jeweils gestaffelt nach oben auseinandergezogen werden können, jedoch nicht auseinanderfallen, sondern in jeder Stellung eine Einheit bilden. Beim Auseinanderziehen bzw. Zusammenschieben werden die in den Hüllen steckenden Informationsträger nicht verschoben, sondern verbleiben sicher an ihrem Aufbewahrungsort.

Durch die Ausbildung der Zunge mit zwei seitlichen Vorsprüngen, die hinter die Ränder einer Aussparung an der Rückseite einer davor angeordneten Hülle greifen, wird mit einfachen Mit-

teln eine Fixierung der Hüllen untereinander in seitlicher Richtung und eine sichere Begrenzung des Verschiebungsweges zwischen den Hüllen erreicht.

Durch den Eingriff des umgebogenen Randes der Rückwand einer Hülle in einer dahinter angeordneten Hülle werden die Hüllen beim Auffächern auseinandergezogen, so dass sie für einen leichten Zugang weit geöffnet werden können.

Die Vielzahl der Hüllen können in einer verschliessbaren Umhüllung angeordnet sein und bei geöffneter Umhüllung kann die Vielzahl der Hüllen in Form einer Schuppentafel auseiannderziehbar sein.

Durch die Anordnung einer Umhüllung, die die hintereinander angeordneten Hüllen entweder allseitig, zumindest aber an vier Seiten umgibt, werden die Hüllen zusammengehalten, so dass die Vorrichtung während des Transports nicht aufgefächert bzw. auseinandergezogen werden kann. Damit wird erreicht, dass der in den Hüllen sich befindliche Inhalt nicht beschädigt oder aus den Hüllen herausfallen kann.

Gemäss einer bevorzugten Ausführungsform ist die Umhüllung in Form eines Etuis ausgebildet, die erste oder vorderste der Vielzahl der Hüllen ist an einem Vorderwandabschnitt der Umhüllung befestigt, die letzte oder hinterste Hülle der Vielzahl der Hüllen ist an der Rückwand der Umhüllung lösbar befestigt und am Rand der vorderen Verschlusswand der Umhüllung ist ein Befestigungselement für die letzte oder hinterste der Vielzahl der Hüllen angeordnet. Im ineinandergeschobenen Zustand sind die vorderste und die hinterste Hülle an der Innenseite der Umhüllung befestigt, so dass ein ungewolltes Auseinanderschieben nicht erfolgen kann. Nach Lösen der hinteren Hülle von der Innenwand der Umhüllung können die Hüllen auseinandergezogen werden, wonach die letzte Hülle an der hochgeklappten Verschlusswand der Umhüllung befestigt werden kann, so dass die Hüllen schuppentafelartig in der auseinandergezogenen Stellung verbleiben und der Inhalt der Hüllen leicht zugänglich ist.

Die Befestigung der ersten und der letzten Hülle an der Vorderwand, der Rückwand bzw. der Verschlusswand der Umhüllung über Druckknöpfe und/oder Klettverschluss. Da auch die vorderste Hülle lösbar an der Innenseite der Umhüllung befestigt ist, können die Hüllen insgesamt aus der Umhüllung herausgenommen und beispielsweise durch andere Hüllen ersetzt werden.

Gemäss einer weiteren bevorzugten Ausführungsform ist die Umhüllung in Form eines allseitig geschlossenen Kastens ausgebildet, die erste oder vorderste Hülle der Vielzahl von Hüllen ist an ihrem unteren Ende an Seitenwangen im Inneren des Kastens angelenkt und vor der ersten und hinter der letzten Hülle sind verschwenkbare Halteleisten an den Seitenwangen angeordnet. Nach dem Öffnen des Kastens erfolgt eine selbsttätige Auseinanderfächerung der Hüllen, da die Halteleisten verschwenkbar sind und den Bewegungen der ersten bzw. letzten Hülle in beschränktem Ausmass nachgeben. Durch Ziehen an der hintersten Hülle können die Hüllen auseinandergezogen werden, wobei sich die hintere Halteleiste etwa waagerecht legt und eine Unterstützung für die Hüllen bildet. Um diese Mechanik zu erreichen ist bevorzugtermassen die vordere Halteleiste an ihrem unteren Bereich und die hintere Halteleiste an ihrem oberen Bereich gelagert.

Ausführungsbeispiele der Erfindung werden anhand der Zeichnung erläutert. Es zeigen:

Fig. 1 die Vorrichtung im auseinandergezogenen Zustand von vorne gesehen, wobei die miteinander verbundenen Hüllen übereinander schuppenartig gestaffelt sind,

Fig. 2 eine schematische perspektivische Ansicht der Vorrichtung im eingeschobenen Zustand als Blockkartei,

Fig. 3 eine schematische perspektivische Ansicht der Vorrichtung im aufgefächerten Zustand,

Fig. 4 die Vorderansicht einer Einzelhülle, vergrössert gezeigt,

Fig. 5 die Rückseite der Hülle,

Fig. 6 eine schematische perspektivische Darstellung einer Einzelhülle, abgebrochen gezeigt,

Fig. 7 zwei miteinander verbundene Hüllen in seitlicher Schnittdarstellung gemäss Schnittlinie VII–VII in Fig. 6,

Fig. 8 eine erste Ausführungsform einer Umhüllung im geschlossenen Zustand,

Fig. 9 die Umhüllung nach Fig. 8 in geöffnetem Zustand,

Fig. 10 die Umhüllung nach den Fig. 8 und 9 mit auseinandergezogenen Hüllen,

Fig. 11 in Seitenansicht eine zweite Ausführungsform einer Umhüllung,

Fig. 12 die Umhüllung nach Fig. 11 in aufgeklapptem Zustand in perspektivischer Darstellung,

Fig. 13 die Umhüllung nach Fig. 11 in aufgeklapptem Zustand in Seitenansicht, und

Fig. 14 die Umhüllung nach Fig. 11 bis 13 mit auseinandergezogenen Hüllen.

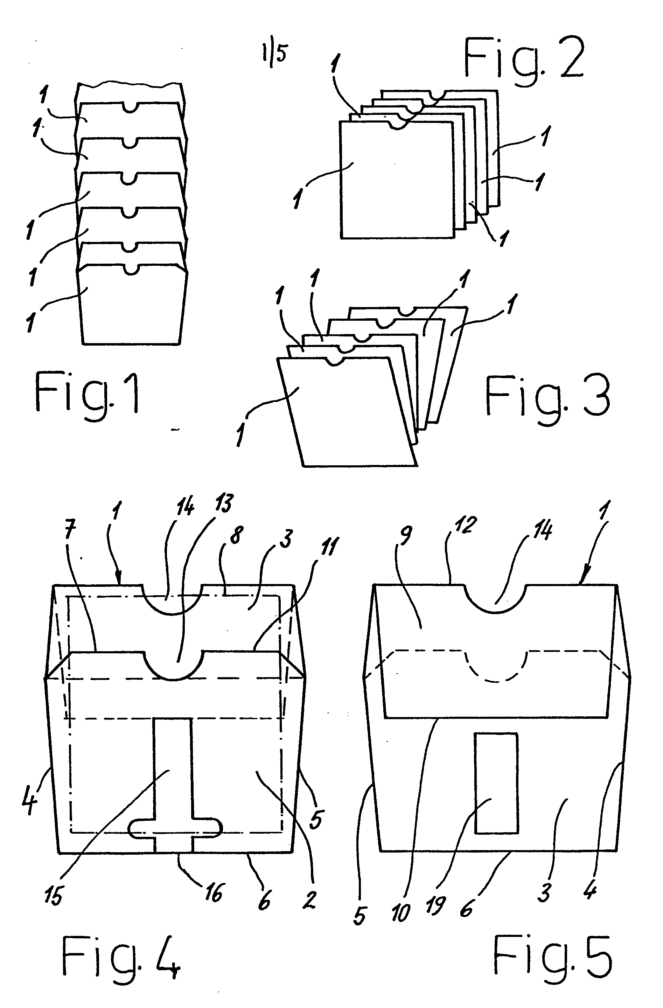

Die Vorrichtung zur geordneten Ablage und Aufbewahrung von flächig ausgebildeten Informationsträgern, beispielsweise von in der EDV verwendeten Disketten, besteht aus einer Mehrzahl hintereinanderliegender, miteinander verbundener und/oder ineinandergesteckter Einzelhüllen 1. Die Verbindung der einzelnen Hüllen 1 untereinander erfolgt dabei in der Weise, dass die Hüllen 1 jeweils seitlich geführt sind, in Höhenrichtung jedoch um einen gewissen Betrag in Bezug aufeinander verschiebbar sind. Wird die hinterste Hülle 1 nach oben gezogen, so nimmt sie nach dem Hochziehen um einen bestimmten Betrag die benachbart vor ihr liegende Hülle 1 mit, diese wiederum die vor ihr liegende usw., bis sämtliche Hüllen 1 mit dem darin gehaltenen Informationsgut schuppenartig übereinanderliegen, wie dies in Fig. 1 gezeigt ist. Im zusammengeschobenen Zustand gemäss Fig. 2 stellen die einzelnen Hüllen 1 eine Blockkartei dar, während es auch möglich ist, die einzelnen Hüllen 1 gemäss Fig. 3 in der Art einer Fächerkartei aufzufächern.

Die miteinander verbundenen Hüllen 1 können also als Blockkartei abgelegt werden, wobei die miteinander verbundenen Hüllen 1 jeweils eine Einheit bilden und zusammengehörige Informationsträger aufnehmen. Der jeweils benötigte Informationsträger kann nach dem Auffächern bzw. dem Hochziehen der Hüllen 1 leicht aufgefunden und herausgenommen werden.

Die Ausbildung der einzelnen Hüllen 1 und ihre Verbindung miteinander geht deutlich aus den Fig. 4 bis 7 hervor. Die Hüllen 1 bestehen im wesentlichen aus der Vorderseite 2 und der Rückseite 3, wobei hierfür folien- oder blattartiges Material, insbesondere Kunststoff, verwendet wird. Die Vorderseite 2 ist im Bereich der Seiten 4 und 5 und im Bereich des unteren Randes 6 mit der Rückseite 3 fest verbunden, insbesondere verschweisst, so dass zwischen Vorder- und Rückseite 2, 3 eine Tasche 7 zur Aufnahme eines Informationsträgers 8 oder dgl. gebildet wird, der in Fig. 4 strichpunktiert bzw. gestrichelt angedeutet ist.

Die Rückseite 3 der Hülle 1 überragt die Vorderseite 2 nach oben und ist um 180° nach hinten umgefaltet, so dass ein Umschlag 9 entsteht. Die Tasche 7 verringert sich nach unten in der Breite allmählich, so dass sie etwa trapezförmig ausgebildet ist, während sich die Rückseite 3 bis zum freien Rand 10 des Umschlages 9 allmählich verjüngt. Sowohl am oberen Rand 11 der Tasche 7 als auch im Bereich der Faltlinie 12, die den oberen Rand der Rückseite 3 bildet, sind jeweils mittig angeordnete Griff- bzw. Sichtaussparungen 13 und 14 vorgesehen. Im übrigen ist die Tasche im Bereich ihres oberen Randes 11 so ausgebildet, dass der Randbereich geringfügig von der Rückseite 3 wegsteht, so dass eine vergrösserte Eintrittsöffnung der Tasche 7 zum leichteren Einbringen des Informationsträgers 8 besteht.

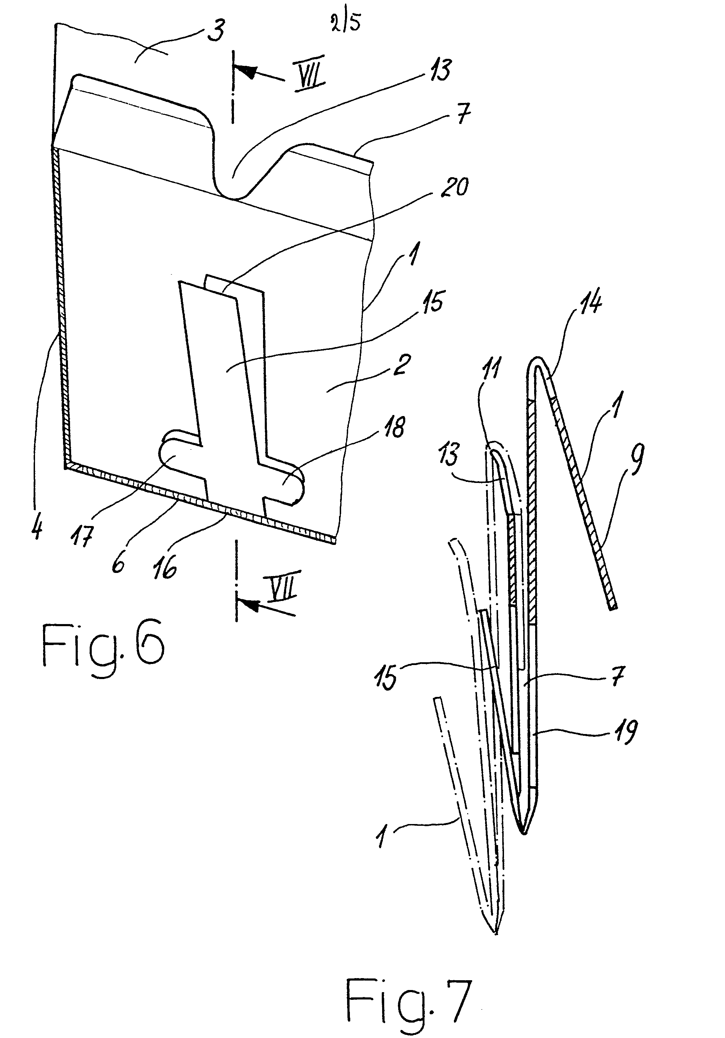

An der Vorderseite 2 der Hülle 1 ist eine Zunge 15 ausgestanzt, die lediglich im Bereich ihres unteren Randes 16 mit der Hülle 1 einstückig verbunden ist. In Fig. 6 ist die leicht nach vorne abgebogene Zunge 15 deutlich zu erkennen. Die Zunge 15 weist in ihrem unteren Bereich, d.h. in der Nähe ihres unteren Randes 16, zwei seitlich vorkragende, einander gegenüberliegende Vorsprünge 17, 18 auf, die einstückig mit der Zunge 15 ausgebildet und zusammen mit dieser aus der Vorderseite ausgestanzt sind. Die Zunge 15 ist, abgesehen von den Vorsprüngen 17, 18, im wesentlichen rechtwinklig ausgebildet, wie ohne weiteres aus den einzelnen Figuren hervorgeht. An der Rückseite 3 der Hülle 1 ist in Ausrichtung auf die Zunge 15 eine rechteckige Aussparung 19 angeordnet, die mit Abstand zum unteren Rand 6 der Hülle 1 beginnt und unterhalb des freien Randes 20 der Zunge 15 endigt. Die Aussparung 19 weist also eine geringere Höhenerstreckung als die Zunge 15 auf. Die Breite der Aussparung 19 hingegen ist geringfügig grösser als die Breite der Zunge 15.

Die Verbindung der einzelnen Hüllen 1 miteinander erfolgt nun in der Weise, dass die Zunge 15 an der Vorderseite 2 einer Hülle 1 die Aussparung 19 der benachbarten davorliegenden Hülle 1 durchgreift, wobei die Vorsprünge 17, 18 die Rückseite 3 der Hülle 1 gleitend hintergreifen. Gleichzeitig greift der Umschlag 9 der davorliegenden Hülle 1 in die Tasche 7 der dahinterliegenden Hülle 1, so dass die Vorderseite 2 dieser Hülle vom Umschlag 9 und der Rückseite 3 der davorliegenden Hülle 1 umfasst wird. Auf diese Weise sind die Hüllen 1 in Bezug aufeinander seitlich geführt, d.h. können seitlich nicht ausweichen, während sie in Höhenrichtung verschiebbar sind. Die seitlichen Vorsprünge 17, 18 sowie der Umschlag 9 bilden hierbei Anschläge, die die Verschiebbarkeit der Hüllen in Höhenrichtung begrenzen. Beim Hochziehen der Hüllen 1 werden diese also stufenweise nacheinander hochgezogen, wobei jeweils die Griff- bzw. Sichtaussparungen 13 in Deckung mit den Griff- bzw. Sichtaussparungen 14 der davorliegenden Hülle 1 gelangen.

Wie ausführlich beschrieben, weisen die taschenartig ausgebildeten Hüllen 1 jeweils eine Zunge 15, eine Aussparung 19 sowie einen umgefalteten Umschlag 9 auf. Lediglich bei der vordersten Hülle entfällt zweckmässigerweise die Zunge 15, während bei der letzten Hülle der Umschlag 9 entfällt und die Aussparung 19 entfallen kann. Die aus den einzelnen Hüllen 1 bestehende Ablagevorrichtung, die eine Einheit bildet, kann jederzeit durch Ein- bzw. Zwischenstecken weiterer Hüllen 1 erweitert und dem Bedarf angepasst werden. Aufgrund der Flexibilität der Zungen 15 und der Vorsprünge 17, 18 ist auch ein leichtes Auffächern der Vorrichtung möglich.

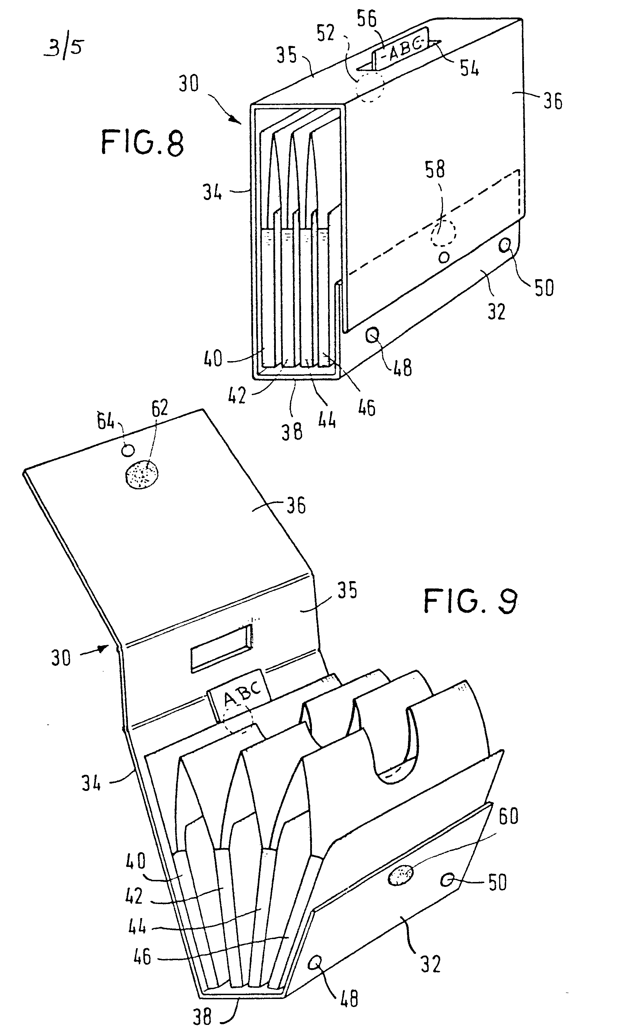

Die in Fig. 8 gezeigte Umhüllung 30 ist etuiartig ausgebildet und weist einen Vorderwandabschnitt 32, eine Rückwand 34, eine Verschlusswand 36, eine Bodenwand 38 und eine Kopfwand 40 auf. Die Bodenwand 38 verbindet die Rückwand 34 mit dem Vorderwandabschnitt 32 und die Kopfwand 35 verbindet die Rückwand 34 mit der Verschlusswand 36. In der Umhüllung 30 sind vier Hüllen 40, 42, 44 und 46 enthalten. Die Hülle 46 stellt die vorderste oder erste Hülle und die Hülle 40 die hinterste oder letzte Hülle dar. Die Hülle 46 ist an ihrer Vorderseite über Druckknöpfe 48, 50 mit dem Vorderwandabschnitt 32 verbunden. Anstelle der Druckknöpfe 48, 50 könnte auch ein Klettverschluss vorgesehen sein. Die letzte oder hinterste Hülle 40 ist an ihrer Rückseite mit der Innenfläche der Rückwand 34 über einen Klettverschluss 52 verbunden, so dass bei hochgeklappter Verschlusswand 36 lediglich eine Auffächerung der Hüllen 40 bis 46 erfolgt, diese jedoch noch mit den Innenflächen der Umhüllung verbunden sind. Die Kopfwand 35 ist mit einer Ausnehmung 54 ausgebildet, durch welche bei geschlossener Umhüllung ein an der letzten Hülle befestigter Reiter 56 mit der Kennzeichnung des Inhalts der Hüllen trägt. Die Verschlusswand 36 ist mit dem Vorderwandabschnitt 32 über einen Klettverschluss 58 verbindbar.

In Fig. 9 ist die Umhüllung 30 geöffnet, so dass die Hüllen 40 bis 42 auseinanderfächern können. Der Klettverschluss 58 besteht aus einem beispielsweise runden Element 60 an der Aussenseite des Vorderwandabschnitts und einem ebenfalls runden Element 62 an der Innenseite der Verschlusswand. Dieses Element 62 hat gleichzeitig die Aufgabe, mit einem an der Rückwand der Hülle 40 angeordneten entsprechenden Verschlusselement zusammenzuwirken, wenn die Hüllen 40 bis 46 auseinandergezogen sind. Diese Anordnung ist in Fig. 3 gezeigt. Im Randbereich der Verschlusswand 36 ist mittig eine Öse 64 angeordnet, mit deren Hilfe die Umhüllung 30 beispielsweise an einen Haken oder einen Nagel in einer Wand angehängt werden kann.

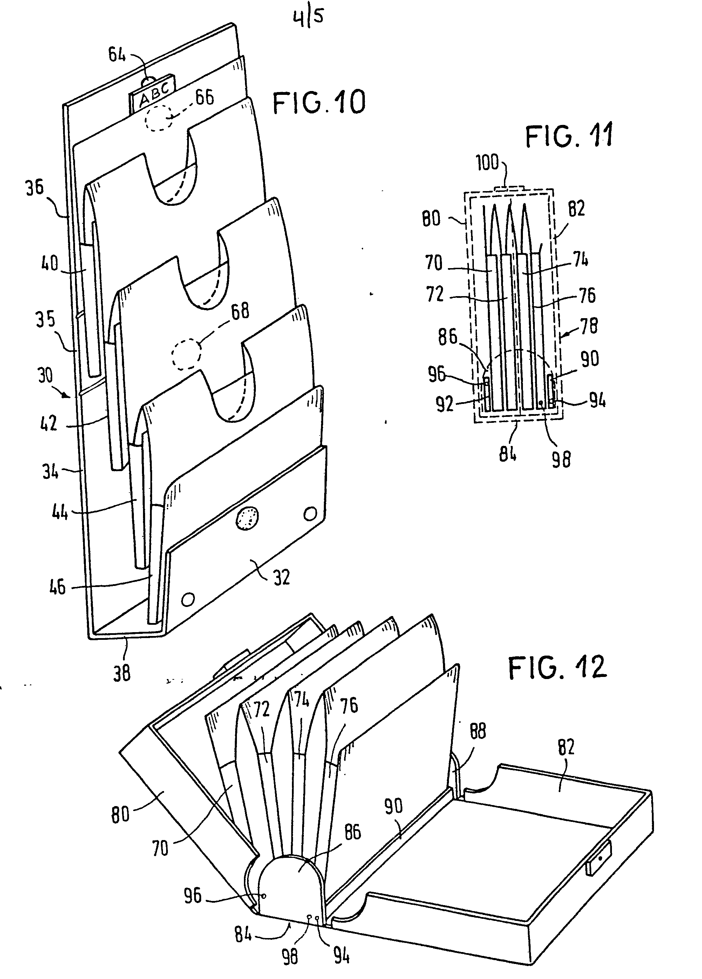

Fig. 10 zeigt die Umhüllung 30 mit auseinandergezogenen Hüllen 40 bis 46, welche schuppentafelartig angeordnet sind. Die letzte Hülle 40 ist mit ihrem Verschlusselement 66 an dem Verschlusselement 62 an der Innenseite der Verschlusswand befestigt, so dass die Hüllen 40 bis 46 in dem auseinandergezogenen Zustand verbleiben und die Vorrichtung in Form einer Schuppentafel an einer Wand aufgehängt werden kann. Ein Gegenelement 48 an der Innenseite der Rückwand ist bei abgezogener hinterster Hülle 40 inaktiv und wirkt erst bei ineinandergeschobenen Hüllen wieder mit dem Element 66 an der Rückseite der hintersten Hülle 40 zusammen.

Fig. 11 zeigt in Seitenansicht einen Aufnahmebehälter für Hüllen 70, 72, 74 und 76, der in Form eines Kastens 78 ausgebildet ist. Der Kasten 78 besteht aus zwei Seitenschalen 80 und 82, die über eine Verbindungswand 84 miteinander verbunden sind. An der Verbindungswand 84 sind Seitenwangen 86 und 88 angeformt. Die Schalen 80 und 82 können im Bereich der Seitenwangen 86 Aussparungen aufweisen, so dass die Seitenwangen Bestandteil der Seitenflächen des Kastens 78 bilden. Es ist aber ebenfalls möglich, dass die Seitenwangen von den Schalen 80 und 82 überdeckt werden, jedoch müssten in diesem Fall die Abmessungen des Kastens 78 geringfügig vergrössert werden. Die sich berührenden Kanten der Schalen 80 und 82 untereinander und mit den Seitenwangen 86 und 88 sind nut- und federartig ausgebildet, so dass der Kasten im geschlossenen Zustand nahezu staubdicht ist.

An den Seitenwangen 86 und 88 sind eine vordere Halteleiste 90 sowie eine hintere Halteleiste 92 gelenkig angeordnet. Die Halteleiste 90 ist dazu an ihrem unteren Bereich mit einer Drehachse 94 und die Halteleiste 92 in ihrem oberen Bereich mit einer Drehachse 96 ausgebildet. Die vorderste Hülle 76 ist an ihrer Unterseite mit einer Drehachse 98 versehen, mit welcher diese Hülle 76 fest an den Seitenwangen 86, 88 gelagert ist. Im geschlossenen Zustand verlaufen die Halteleisten 90 und 92 parallel zu den Hüllen 70 bis 76.

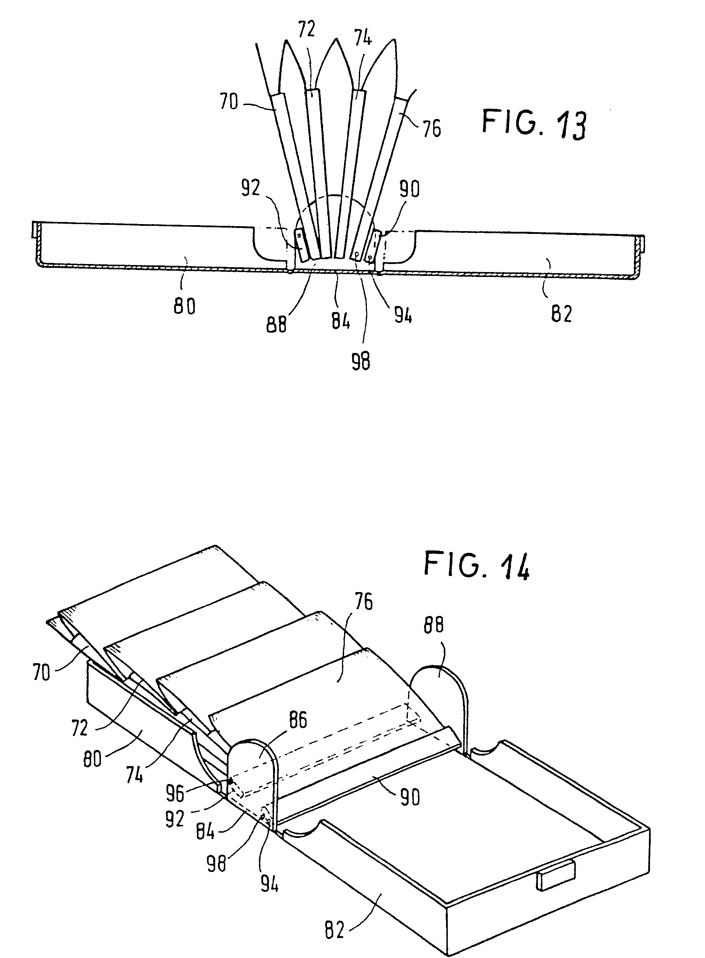

In den Fig. 12 und 13 ist der Kasten 78 im geöffneten Zustand in perspektivischer Ansicht bzw. in Seitenansicht gezeigt. Sobald die Schalen 80 und 82 des Kastens 78 getrennt werden, fächern sich die Hüllen 70 bis 76 soweit auf, wie es die Halteleisten 90 und 92 zulassen. Der Öffnungswinkel ist begrenzt, da die Halteleisten 90 und 92 in verschiedenen Bereichen angelenkt sind. Die freien Bereiche der Halteleisten 90 und 92 bilden bei einem maximalen Öffnungswinkel Widerlager, so dass ein völliges Auseinanderklappen der Hüllen nicht erfolgen kann. Da die hintere Hülle 70 nur an der Halteleiste 92 anliegt und nicht an den Seitenwangen 86 und 88 angelenkt ist, kann durch Ziehen an der hinteren Hülle 70 eine Anordnung der Hüllen 70 bis 76 in Form einer Schuppentafel erfolgen, wie es in Fig. 14 dargestellt ist. Die auseinandergezogenen Hüllen 70 bis 76 können dann auf die Schale 80 des Kastens 78 umgelegt werden. Die Halteleisten 90 und 92 passen sich der Lage der vorderen Hülle 76 an. Zum Verschliessen des Kastens 78 kann an den Schalen 80 und 82 ein Schloss 100 vorgesehen sein.

### Patentansprüche

1. Vorrichtung zur geordneten Ablage und Aufbewahrung von flächig bzw. blatt- oder folienförmig ausgebildeten Gegenständen, insbesondere flächigen Informationsträgern, wie Disketten, Mikrofilmen, Schallplatten, Fotos, Karteikarten usw., wobei mehrere in beliebiger Anzahl hintereinander angeordnete, die Gegenstände (8) aufnehmende taschenartige Hüllen (1), die jeweils derart miteinander verbunden und/oder ineinandergesteckt sind, dass jede Hülle (1) in bezug auf die jeweils benachbart davorliegende Hülle (1) seitlich geführt und um einen bestimmten Betrag nach oben verschiebbar gehalten ist, vorgesehen sind, und wobei die Hüllen (1) – abgesehen von der vordersten Hülle – jeweils eine an der Vorderseite (2) angeordnete Zunge (15) aufweisen, die in eine Aussparung (19) in der Rückseite (3) der davor angeordneten Hülle (1) eingreift, und deren an der Rückseite (3) angeordnete Aussparung (19) von der Zunge (15) der dahinterliegenden Hülle (1) durchgriffen ist, dadurch gekennzeichnet, dass jede Zunge (15) zwei seitliche, einander gegenüberliegende Vorsprünge (17, 18) aufweist, die die Rückseite (3) der davorliegenden Hülle (1) unter seitlicher Arretierung und in Höhenrichtung gleitend hintergreifen.

2. Vorrichtung nach Anspruch 1, dadurch gekennzeichnet, dass die Rückseite (3) der Hüllen (1) – abgesehen von der hintersten Hülle – einem um 180° nach hinten umgefalteten Umschlag (9) aufweist, der gleitend in die dahinterliegende Hülle (1) eingreift und zusammen mit der Hüllenrückseite (3) die Vorderseite (2) der dahinterliegenden Hülle (1) umfasst.

3. Vorrichtung nach Anspruch 1 oder 2, dadurch gekennzeichnet, dass die Zungen (15) aus der Vorderseite (2) der Hülle (1) ausgestanzt sind und mit ihrem unteren Rand (16) einstückig mit der jeweiligen Hülle (1) in Verbindung stehen, und dass die Länge der Zungen (15) grösser ist als die Länge der Aussparungen (19), während die Breite der Aussparungen (19) gleich oder geringfügig grösser ist als die Breite der Zungen (15).

4. Vorrichtung nach einem der Ansprüche 1 bis 3, dadurch gekennzeichnet, dass die Höhe der Rückseite (3) jeder Hülle (1) grösser ist als die Höhe deren Vorderseite (2) und dass die Breite der Hüllen (1) im Bereich der Öffnung der Taschen (7) am grössten ist und sich nach unten wie nach oben bis zum freien Ende (10) des Umschlags (9) hin kontinuierlich geringfügig verkleinert.

5. Vorrichtung nach einem der Ansprüche 1 bis 4, dadurch gekennzeichnet, dass sowohl am oberen Rand (11) der Vorderseite (2) der Hüllen (1) wie auch darüberliegend an der Faltlinie (12) zwischen Rückseite (3) und Umschlag (9) Sicht- bzw. Griffaussparungen (13) und (14) angeordnet sind, wobei die Griffaussparungen (13) der Vorderseite (2) einer benachbarten hinteren Hülle (1) im hochgezogenen Zustand mit den Griffaussparungen (14) der Hüllenrückseite (3) bzw. des Umschlags (9) der davor angeordneten Hülle (1) fluchten.

6. Vorrichtung nach einem der Ansprüche 1 bis 5, dadurch gekennzeichnet, dass die Hüllen (1) aus Kunststoff bestehen, wobei die Hüllenvorderseite (2) mit der Hüllenrückseite (3) seitlich und unten verschweisst ist.

7. Vorrichtung nach einem der vorhergehenden Ansprüche, dadurch gekennzeichnet, dass die Vielzahl der Hüllen (40 bis 46; 70 bis 76) in einer verschliessbaren Umhüllung (30, 78) angeordnet ist, und dass bei geöffneter Umhüllung (30, 78) die Vielzahl der Hüllen (40 bis 46; 70 bis 76) in Form einer Schuppentafel auseinanderziehbar ist.

8. Vorrichtung nach Anspruch 7, dadurch gekennzeichnet, dass die Umhüllung (30) in Form eines Etuis ausgebildet ist, dass die erste oder vorderste Hülle (46) der Vielzahl der Hüllen (40 bis 46) an einem Vorderwandabschnitt (32) der Umhüllung (30) befestigt ist, dass die letzte oder hinterste Hülle (40) der Vielzahl der Hüllen (40 bis 46) an der Rückwand (34) der Umhüllung (30) lösbar befestigt ist, und dass am Rand der vorderen Verschlusswand (36) der Umhüllung (30) ein Befestigungselement (58, 66) für die letzte oder hinterste Hülle (40) der Vielzahl der Hüllen (40 bis 46) angeordnet ist und dass die Befestigung der ersten und der letzten Hülle (46, 40) an der Vorderwand (32), der Rückwand (34) bzw. der Verschlusswand (36) der Umhüllung (30) über Druckknöpfe (48, 50) und/oder Klettverschluss (58, 66, 68) erfolgt.

9. Vorrichtung nach Anspruch 7, dadurch gekennzeichnet, dass die Umhüllung in Form eines allseitig geschlossenen Kastens (78) ausgebildet ist, dass die erste oder vorderste Hülle (76) der Vielzahl der Hüllen (70 bis 76) an ihrem unteren Ende an Seitenwangen (86, 88) im Inneren des Kastens (78) angelenkt ist, dass vor der ersten und hinter der letzten Hülle (76, 70) verschwenkbare Halteleisten (90, 92) an den Seitenwangen (86, 88) angeordnet sind und dass die vordere Halteleiste (90) an ihrem unteren Bereich und die hintere Halteleiste (92) an ihrem oberen Bereich gelagert ist.

**Revendications**

1. Dispositif pour ranger et emmagasiner en ordre des objets plats et sous forme de lames ou de feuilles, en particulier des supports plats d'information tels que disquettes, microfilms, disques, photos, fiches, etc..., cependant que plusieurs compartiments (1) en forme de poche destinée à recevoir les objets (8), placés l'un derrière l'autre en nombre quelconque, sont prévus, reliés l'un avec l'autre et/ou emboîtés l'un dans l'autre, de manière que chaque compartiment (1) est guidé latéralement par rapport au compartiment voisin (1) se situant respectivement devant lui et est maintenu mobile vers le haut d'un débattement déterminé, tandis que les compartiments (1) – exception faite de celui qui est placé le plus en avant – présentent respectivement, placée sur leur côté avant (2), une languette (15) qui pénètre dans un évidement (19) du côté arrière (3) du compartiment (1) situé devant, et dont l'évidement (19) placé sur le côté arrière (3) est traversé par la languette (15) du compartiment (1) situé derrière lui, caractérisé par le fait que chaque languette (15) présente, situées l'une en face de l'autre, deux saillies latérales (17, 18) qui avec un blocage latéral et un glissement dans le sens de la hauteur agrippent le côté arrière (3) du compartiment (1) situé devant.

2. Dispositif selon la revendication 1, caractérisé par le fait que le côté arrière (3) des compartiments (1) – exception faite de celui qui est placé de plus en arrière – présente un rabat (9) replié de 180° vers l'arrière qui en glissant pénètre dans le compartiment (1) situé derrière lui et constitue avec le côté arrière (3) de son compartiment le côté avant (2) du compartiment (1) situé derrière lui.

3. Dispositif selon la revendication 1 ou 2, caractérisé par le fait que les languettes (15) sont découpées dans le côté avant (2) du compartiment (1), reliée par leur bord inférieur (16), en un seul tenant, avec le compartiment respectif (1) et que la longueur des languettes (15) est supérieure à celle des évidements (19), la largeur des évidements (19) étant la même que celle des languettes (15) ou faiblement supérieure.

4. Dispositif selon l'une des revendications 1 à 3, caractérisé par le fait que la hauteur du côté arrière (3) de chaque compartiment (1) est supérieure à celle de son côté avant (2) et que la largeur des compartiments (1) est maximale dans la zone de l'ouverture des poches (7) et se rétrécit peu à peu de manière continue vers le bas comme vers le haut jusqu'à l'extrémité libre (10) du rabat (9).

5. Dispositif selon l'une des revendications 1 à 4, caractérisé par le fait que des évidements (13) et (14), qui permettent de voir et de prendre, sont prévus aussi bien au bord supérieur (11) du côté avant (2) des compartiments (1) qu'également au-dessus au pli (12) entre le côté arrière (3) et le rabat (9), les évidements (13), qui permettent de prendre, du côté avant (2) d'un compartiment (1) arrière voisin s'alignant, dispositif replié, avec les évidements (14), qui permettent de prendre, du côté arrière (3) et du rabat (9) du compartiment (1) situé devant.

6. Dispositif selon l'une des revendications 1 à 5, caractérisé par le fait que les compartiments (1) sont en matière synthétique, le côté avant (2) des compartiments étant soudé latéralement et en bas avec leur côté arrière (3).

7. Dispositif selon l'une des revendications précédentes, caractérisé par le fait que la plupart des compartiments (40 à 46; 70 à 76) sont placés dans une armature (30, 78) fermant à clé et que, l'armature ouverte (30, 78), ils peuvent se déplier sous la forme d'un tableau à écailles.

8. Dispositif selon la revendication 7, caractérisé par le fait que l'armature (30) a la forme d'un étui, que le premier compartiment (46), ou le plus en avant, de la plupart des compartiments (40 à 46) est fixé à une section avant (32) de l'armature (30), que le dernier compartiment (40), ou le plus en arrière, de la plupart des compartiments (40 à 46) est fixé, détachable, à la paroi arrière (34) de l'armature (30) et par le fait qu'au bord de la paroi avant de fermeture (36) de l'armature (30) est placé un élément de fixation (58, 66) pour le dernier compartiment (40) ou le plus en arrière, de la plupart des compartiments (40 à 46) et par le fait que la fixation du premier et du dernier compartiments (46, 40) à la paroi avant (32), à la paroi arrière (34) ou à la paroi de fermeture (36) de l'armature (30) s'effectue au moyen de boutons-pression (48, 50) et/ou d'une fermeture à crampons (58, 66, 68).

9. Dispositif selon la revendication 7, caractérisé par le fait que l'armature a la forme d'un coffret (78) entièrement fermé, que le premier compartiment (76), ou le plus en avant, de la plupart des compartiments (70 à 76) est articulé à son extrémité inférieure, à l'intérieur du coffret (78), sur des joues latérales (86, 88) que devant le premier et derrière le dernier compartiment (76, 70) sont placés entre les joues latérales (86, 88) des rebords de retenue (90, 92) capables de pivoter et que le rebord de retenue avant (90) est monté à sa partie inférieure et le rebord de retenue arrière (92) à sa partie supérieure.

**Claims**

1. Equipment for accommodating and storing items in sheet or foil form arranged flat, particularly flat data supports such as discs, microfilms, gramophone records, photographs, index cards etc. having any number of pocket-like casings (1) to accommodate the items (8) disposed one behind the other and joined and/or fitted together, so that each casing (1) is guided laterally in relation to the casing (1) disposed in front and can be slid upwards for a limited amount while the casings (1), seen from the front casing, each have a tongue (15) on the front (2) engaged in an opening (19) in the rear (3) of the casing in front, and the tongue (15) of the casing (1) behind passes through the opening (19) in the rear, characterized in that each tongue (15) has two opposite lateral protrusions (17, 18) engaging behind the rear (3) of the casing in front, slidable in the vertical direction and forming a lateral locking device.

2. Equipment in accordance with claim 1, characterized in that, seen from the rearmost casing, the rear (3) of each casing (1) has a flap (9) folded over rearwardly through 180° and slidable in the casing (1) behind it, and enclosing the front (2) of the casing (1) behind it together with its own rear side (3).

3. Equipment in accordance with claim 1 or 2, characterized in that the tongues (15) are stamped out of the fronts (2) of the casings (1), with which they are integral being joined to them along the bottom edge (16), and that the length of the tongues (15) is greater than the length of the openings (19), while the width of the openings (19) is equal to or slightly greater than the width of the tongues (15).

4. Equipment in accordance with one of claims 1 to 3, characterized in that the height of the rear (3) of each casing (1) is greater than the hight of the front (2), and that the width of the casings (1) is greatest at the opening to the pocket (7) and reduces continuously and slightly both upwardly and downwardly to the free end (10) of the flap (9).

5. Equipment in accordance with one of claims 1 to 4, characterized in that both at the top edge (11) of the front (2) of the casing (1) and also above it at the fold line (12) between the rear (3) and the flap (9) sight and grip holes (13, 14) are formed, the grip holes (13) in the front (2) of an adjacent casing (1) to the rear being in line in the lifted position with the grip holes (14) in the rear (3) and flap (9) of the casing (1) in front.

6. Equipment in accordance with one of claims 1 to 5, characterized in that the casings (1) are of plastics material, with the front (2) welded to the rear (3) at the sides and the bottom.

7. Equipment in accordance with one of the preceding claims, characterized in that the considerable number of casings (40 to 46; 70 to 76) are contained in a lockable box (30, 78), and that when the box (30, 78) is opened the casings (40 to 46; 70 to 76) can be pulled apart into a staggered pattern.

8. Equipment in accordance with claim 7, characterized in that the box (30) is in the form of a briefcase, that the first or foremost casing (46) of the considerable number of casings (40 to 46) is fixed to a front wall (32) of the box (30), that the last or rearmost casing (40) of the considerable number of casings (40 to 46) is detachably secured to the rear wall (34) of the box (30), and that a fixing device (58, 66) is mounted at the edge of the front closing wall (36) of the box for the last or rearmost casing (40) of the considerable number of casings (40 to 46), and that fixing of the first and last casings (46, 40) to the front wall (32), the rear wall (34) and the closing wall (36) of the box (30) is by press-studs (48, 50) and/or hook-clasp fasteners (58, 66, 68).

9. Equipment in accordance with claim 7, characterized in that the box is in the form of a case (78) closed on all sides, that the first or foremost casing (76) of the considerable number of casings (70 to 76) is attached at the bottom to side faces (86, 88) inside the case (78), that in front of the first and behind the last casing (76, 70) pivotable holding strips (90, 92) are mounted on the side faces (86, 88), and that the front holding strip (90) is in bearings at its bottom part and the rear holding strip (92) in bearings at its top part.

1|5

Fig. 2

Fig. 1

Fig. 3

Fig. 4

Fig. 5

**Fig. 6**

**Fig. 7**

3/5

FIG.8

FIG. 9

13

FIG.10

FIG. 11

FIG. 12

FIG. 13

FIG. 14

17